# EUROPEAN PATENT SPECIFICATION

(11) **EP 3 542 033 B1**
(45) Date of publication and mention of the grant of the patent: **26.07.2023**
(21) Application number: 16922031.6
(22) Date of filing: 18.11.2016
(51) Int. Cl.: F01D 17/16

(54) **LOW-FRICTION INLET NOZZLE FOR A TURBOEXPANDER**
REIBUNGSARMER EINLASSLEITAPPARAT FÜR EINEN TURBOEXPANDER
DISTRIBUTEUR D'ENTRÉE À FAIBLE FROTTEMENT POUR UN TURBODÉTENDEUR

(43) Date of publication of application: 25.09.2019
(73) Proprietor: L'Air Liquide, Société Anonyme pour l'Etude et l'Exploitation des Procédés Georges Claude, 75007 Paris (FR)
(72) Inventor: LIU, Jingfeng, Shanghai 200233 (CN)
(74) Representative: Air Liquide
(86) International application number: PCT/CN2016/106323
(87) International publication number: WO 2018/090307

(56) References cited:
- EP-A1- 3 064 720
- CN-A- 101 663 466
- CN-A- 102 762 838
- CN-A- 105 723 067
- DE-A1-102008 060 251
- DE-A1-102012 103 412
- DE-A1-102012 211 417
- US-A1- 2009 257 867
- US-A1- 2010 290 895
- US-B1- 6 314 736
- US-B2- 8 641 372

## Description

### Background

Recently the interest in recovering energy from high-temperature or high-pressure gases has increased. However, the available devices are not as efficient as possible and suffer from certain limitations that are discussed later. As any high-temperature or high-pressure gas is a potential resource for energy recovery, generator-loaded expanders or turbines or turbo expanders can be custom engineered to recover a large amount of useful energy available in the process.

One field in which turbo expanders play a role is waste heat recovery. Waste heat can be converted to useful energy with a turbo expander-generator alone or as a component in a more complex system. Potential heat sources include: tail gas from industrial furnaces or combustion engines, waste vapor from industrial furnaces or combustion engines, waste vapor from chemical and petrochemical processes, and solar heat from flat or parabolic reflectors. Exhaust gases are hot and may contain solvents or catalysts. An expander can not only recover energy and cool down exhaust gases which vent to the atmosphere, it can also separate solvents or catalysts.

Another field in which turbo expanders are useful is the extraction of useful work in pressure letdown applications. In pressure letdown applications, such as the merging of two transmission pipelines at different pressures or at a city gate of a gas distribution system, a turbo expander-generator can reduce the pressure of large volume gas streams while at the same time recovering energy in the form of electric power. An expander can therefore be a profitable replacement for other pressure regulating equipment such as control valves and regulators.

A turbo expander, also referred to as a turbo-expander or an expansion turbine, is a centrifugal or axial flow turbine through which a high-pressure gas is expanded to produce work that is often used to drive a compressor. Because work is extracted from the expanding high-pressure gas, the gas expansion may approach an isentropic process (i.e., a constant entropy process) and the low pressure exhaust gas from the turbine is at a low temperature, sometimes as low as -90.degree. C. or less.

Because of the low temperature generated, turbo expanders are widely used as sources of refrigeration in industrial processes such as the extraction of ethane and the formation of liquefied natural gas (NGLs) from natural gas, the liquefaction of gases (such as oxygen, nitrogen, helium, argon and krypton) and other low-temperature processes.

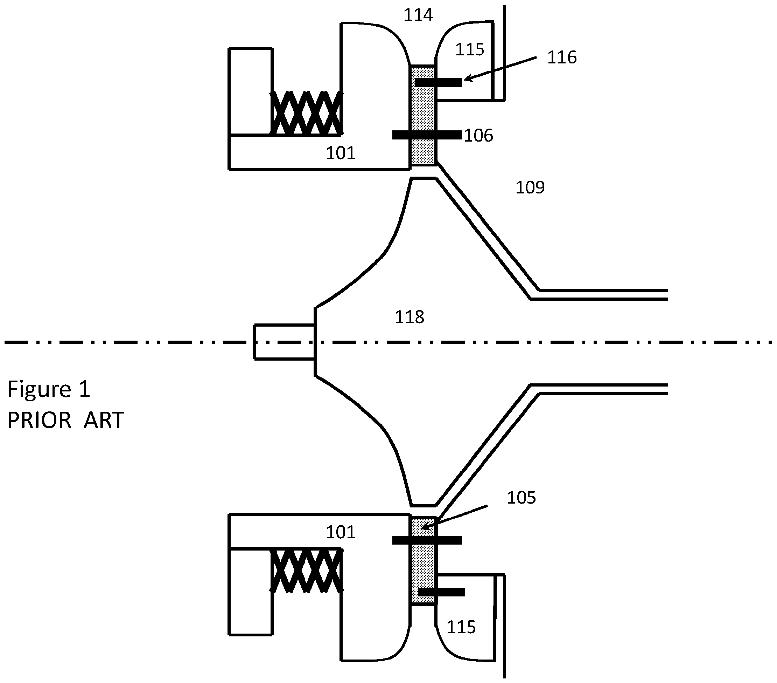

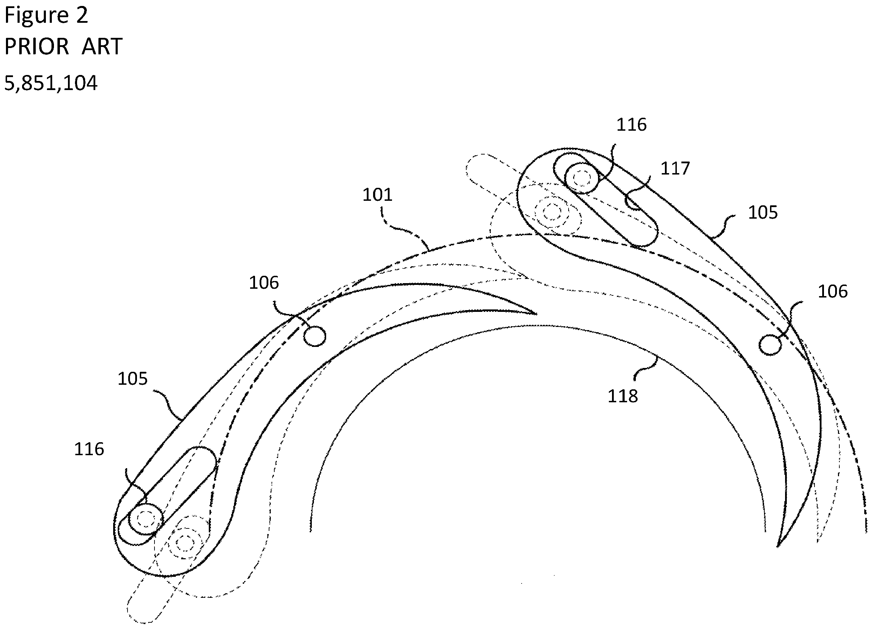

A representative, but non-limiting, example of a turbo expander is shown in Figure 1, and Figure 2, which is reproduced from U.S. Pat. No. 5,851104. Figure 1 shows a variable nozzle arrangement in a radial inflow turbine. A fixed ring **109** is positioned to one side of the annular inlet **114.** The nozzle adjustment system is provided to the same side of the annular inlet **114.** An adjusting ring **115** is arranged radially outwardly of a fixed ring 109. The adjusting ring **115** is able to rotate about the fixed ring 109 which is prevented from rotating by nozzle pivot pins **106** anchored in the fixed ring **109.**

Inlet nozzles **105** are located about the annular inlet **114.** These vanes **105** are positioned between the fixed ring **109** and adjusting ring **115** on one side and the nozzle cover ring **101** on the other. The vanes **105** are configured to provide a streamlined flow path there between. This path may be increased or decreased in cross-sectional area based on the rotational position of the vanes **105.** The vanes **105** are pivotally mounted about the nozzle pivot pins **106.** The relative positioning of the vanes **105** with respect to the nozzle cover ring **101** is illustrated by the superimposed phantom line in Figure 2. Expander wheel **118** receives the compressed gas stream that is directed through the annular inlet **114** and through vanes **105.** This compressed gas stream expands and causes the expander wheel **118** to rotate, thereby producing work.

In the US 5,851,104 patent, the nozzle adjusting mechanism includes a cam and cam follower mechanism. Cam followers **116** are displaced laterally from the axis of the pins **106** and are fixed by shafts in the vanes **105,** respectively, as shown in Figure 2. The cam followers **116** rotate about the shafts freely. To cooperate with the cam followers **116,** cams in the form of biased slots **117** are arranged in the adjusting ring **115** (not shown in figure 2). They are sized to receive the cam followers **116** so as to allow for free-rolling movement as the adjusting ring **115** is rotated.

The above described arrangement of the vanes **105,** cam followers **116,** biased slots **117** and the adjusting ring **115** make the opening of the vanes **105** linearly dependant on a rotation of the adjusting ring **115.** In other words, a given rotation of the adjusting ring **115** produces the same preset rotation of the vanes **105** irrespective of whether the vanes **105** are near an opened position, are in an opened position, are near a closed position or are in a closed position. This constant rotation of the vanes **105** with the rotation of the adjusting ring **115** does not allow for any varied sensitivity in the adjustment of the position of vanes **105.**
US2010/290895A1 discloses a supercharger device having a nozzle cover ring and nozzle blades separated via a radial bead. US6314736B1 discloses a supercharger device using a fluid pressure of an on-board compressed-air network to develop a force on the annular piston for adjusting its position relative to the blades. US2009/257867A1 discloses a supercharger device having a spacer placed between the guide vane mounting ring and the guide vane cover ring. DE102012103412A1 discloses a nozzle for a turbocharger where an axial mobility of the nozzle cover ring is brought by a spring element and a spacer ensures a constant distance between the guide vanes and the cover ring secured with each other by said spacer.

In traditional turbo expanders an adjusting ring typically directly slides on vanes which produces friction and may damage part of the adjusting ring and/or vanes. The same sliding motion may prematurely wear the adjusting ring and/or vanes. A specific, but non-limiting, example would be the Atlas Copco ETB type expander nozzle. This nozzle is of the same basic design as defined above, and typically has poor reliability. The industry sees a high failure frequency which is caused by inlet guide vanes (nozzles) sticking. Typically, after such a failure, a total overhaul is performed, but given that the basic design has not changed, these nozzles can only be operated a short time before another failure can be expected.

Accordingly, a need has arisen in the industry to provide a solution to avoid the afore-described problems.

### Summary

A low friction inlet nozzle for a turbo expander is presented as set forth in claim 1. The predetermined distance may be between 0.02 and 0.04 mm.

### Brief Description of the Figures

Figure 1 schematically illustrates the cross section of a typical turbo expander as known to the prior art.
Figure 2 schematically illustrates details of the inlet guide vanes (nozzle blades) as known to the prior art.
Figure 3 schematically illustrates an exploded cross section of a turbo expander in accordance with one embodiment of the present invention.
Figure 4 schematically illustrates across section of a turbo expander in accordance with one embodiment of the present invention.

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed. The scope of the invention is defined by the appended claims.

### Figure elements:

- 100 =: turbo expander
- 101 =: nozzle cover ring
- 102 =: nozzle cover ring face
- 103 =: nozzle cover ring first pivot pin orifice
- 104 =: nozzle cover ring axial loading bolt orifice
- 105 =: inlet nozzles
- 106 =: nozzle pivot pins
- 107 =: nozzle first face
- 108 =: nozzle second face
- 109 =: fixed ring
- 110 =: fixed ring face
- 111 =: fixed ring second pivot pin orifice
- 112 =: fixed ring pressure springs
- 113 =: fixed ring axial loading bolts
- 114 =: annular inlet
- 115 =: adjusting ring
- 116 =: cam followers
- 117 =: nozzle biased slots
- 118 =: expander wheel

With respect to the above identified problems, after analysis and testing, it was found that the root cause of many nozzle failures were the high amount of friction between the moving parts of the nozzle. The various embodiments of the proposed invention reduce this friction, possibly to zero.

As the intention of the present invention is to remedy these problems in situ, to existing turbo-expander installations, as much of the original design as possible must be maintained. In the present invention axial loading bolts **113** are utilized to reduce the preload to zero.

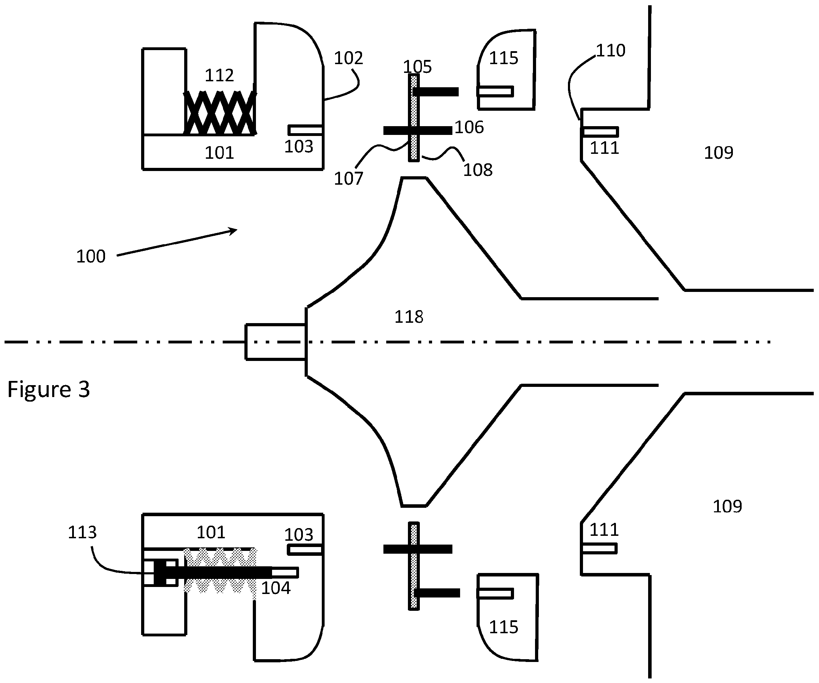

Turning to Figure 3, an exploded view of a low friction inlet nozzle for a turbo expander **100** in accordance with one embodiment of the present invention is provided. The nozzle includes a nozzle cover ring **101,** wherein the nozzle cover ring **101** comprises a face **102,** a first pivot pin orifice **103,** and an axial loading bolt orifice **104.** The nozzle also includes a set of nozzle blades **105,** wherein each nozzle blade **105** comprises a pivot pin **106,** a first face **107** and a second face **108.** Also included is a fixed ring **109,** wherein the fixed ring comprises a face **110** and a second pivot pin orifice **111,** a set of pressure springs **112,** and a set of axial loading bolts **113.** The number of axial loading bolts **113** will depend on the size and design of the turbo expander, but in one embodiment of the present invention, there may be 8 axial loading bolts **113.**

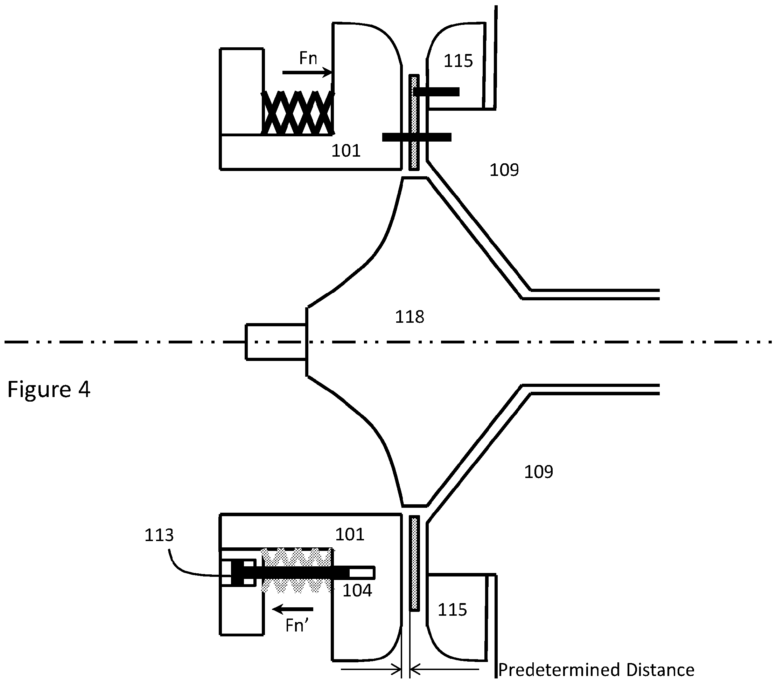

Turning to Figure 4, and in the interest of consistency and clarity maintaining the element numbers from the prior figures, the axial loading bolts **113** are configured to accept all or at least a portion of the force which the set of pressure springs **112** induces between the nozzle cover ring **101** and the first face **107** of the nozzle blades **105.** And the first face **107** of the nozzle blade **105** is located at a predetermined distance away from the face **102** of the nozzle cover ring **101.** As the preloading force generated by the pressure springs **112** has been reduced to zero, the second face **108** of each nozzle blade **105** is no longer being forced into in contact with the face **110** of the fixed ring **109.**

The inventors discovered that a major source of friction arises along the contacting surfaces of the nozzle cover ring **101,** nozzle blade **105,** and fixed ring **109.** This results in sliding friction on the nozzle blades **105.** The precondition of slide friction is contact surface (pressure) "Fn", roughness "µ" and sliding. The force of friction for each blade is F=Fn* µ_{∘} It is clear from this equation that to reduce friction "F", either the preload "Fn" or the surface roughness "µ" must be reduced. In various embodiments of the present invention, the preload "Fn" is reduced.

The preload that pressure springs **112** places on the nozzle blades **105** is F, as indicated in Figure 4. The axial loading bolts **113** are adjusted to reduce this preload by drawing the cover ring **101** to the left (as indicated in Figure 4) and thus away from nozzle blades **105.** Once the preload has been reduced to zero, further adjustment of the axial loading bolts **113** produces a gap between the nozzle cover ring **101** and the nozzle blades **105.** Once this gap reaches predetermined distance, this is set. This predetermined distance may be between 0.02 and 0.04 mm.

Thus, the friction between the nozzle cover ring **101** and the nozzle blades **105** has been reduced to zero. Also, the friction between the nozzle blades **105** and the fixed ring **109** has been reduced to zero.

## Claims

1. A low friction inlet nozzle for a turbo expander (100), comprising:
• a nozzle cover ring (101), wherein the nozzle cover ring (101) comprises a face (102),
• a set of nozzle blades (105), wherein each nozzle blade (105) comprises a nozzle first face (107) and a nozzle second face (108),
• a set of pressure springs (112), and
• a set of axial loading bolts (113)
wherein the axial loading bolts (113) are configured to accept all the force which the set of pressure springs (112) induces between the nozzle cover ring (101) and the first face (107) of each one of the nozzle blades (105),
wherein the pressure springs (112) are configured to place a preload on the first face (107) of each one of the nozzle blades (105),
wherein the axial loading bolts (113) are adjustable to reduce said preload by drawing the nozzle cover ring (101) away from the first face (107) of each one of the nozzle blades (105), thereby reducing the preload to zero,
wherein, once the preload is reduced to zero, the axial loading bolts (113) are further adjustable to produce a gap between the nozzle cover ring (101) and the first face (107) of each one of the nozzle blades (105), thereby locating the first face (107) of each one of the nozzle blades (105) at a predetermined distance away from the face (102) of the nozzle cover ring (101).

2. The low friction inlet nozzle of claim 1, wherein the predetermined distance is between 0.02 and 0.04 mm.

## Patentansprüche

1. Reibungsarme Einlassdüse für einen Turboexpander (100), umfassend:
- einen Düsenabdeckring (101), wobei der Düsenabdeckring (101) eine Fläche (102) umfasst,
- einen Satz von Düsenschaufeln (105), wobei jede Düsenschaufel (105) eine erste Düsenfläche (107) und eine zweite Düsenfläche (108) umfasst,
- einen Satz von Druckfedern (112) und
- einen Satz von Axialbelastungsschrauben (113),
wobei die Axialbelastungsschrauben (113) dazu ausgebildet sind, die gesamte Kraft aufzunehmen, die der Satz von Druckfedern (112) zwischen dem Düsenabdeckring (101) und der ersten Fläche (107) jeder der Düsenschaufeln (105) einleitet,
wobei die Druckfedern (112) dazu ausgebildet sind, die erste Fläche (107) jeder der Düsenschaufeln (105) mit einer Vorbelastung zu beaufschlagen,
wobei die Axialbelastungsschrauben (113) dahingehend einstellbar sind, dass die Vorbelastung reduziert wird, indem der Düsenabdeckring (101) von der ersten Fläche (107) jeder der Düsenschaufeln (105) weggezogen wird, wodurch die Vorbelastung auf null reduziert wird,
wobei nach Reduzierung der Vorbelastung auf null die Axialbelastungsschrauben (113) weiter dahingehend einstellbar sind, dass zwischen dem Düsenabdeckring (101) und der ersten Fläche (107) jeder der Düsenschaufeln (105) ein Spalt erzeugt wird, wodurch die erste Fläche (107) jeder der Düsenschaufeln (105) in einem vorbestimmten Abstand von der Fläche (102) des Düsenabdeckrings (101) positioniert wird.

2. Reibungsarme Einlassdüse nach Anspruch 1, wobei der vorbestimmte Abstand zwischen 0,02 und 0,04 mm liegt.

## Revendications

1. Buse d'entrée à faible frottement pour un turbodétendeur (100), comprenant :
• une bague de recouvrement de buse (101), la bague de recouvrement de buse (101) comprenant une face (102),
• un ensemble d'aubes de buse (105), chaque aube de buse (105) comprenant une première face de buse (107) et une seconde face de buse (108),
• un ensemble de ressorts de pression (112), et
• un ensemble de boulons de chargement axial (113)
les boulons de chargement axial (113) étant conçus pour accepter toute la force que l'ensemble de ressorts de pression (112) induit entre la bague de recouvrement de buse (101) et la première face (107) de chacune des aubes de buse (105),
les ressorts de pression (112) étant conçus pour placer une précharge sur la première face (107) de chacune des aubes de buse (105),
les boulons de chargement axial (113) étant réglables pour réduire ladite précharge en éloignant la bague de recouvrement de buse (101) de la première face (107) de chacune des aubes de buse (105), réduisant ainsi la précharge à zéro,
une fois la précharge réduite à zéro, les boulons de charge axiale (113) étant en outre réglables pour produire un espace entre la bague de recouvrement de buse (101) et la première face (107) de chacune des aubes de buse (105), plaçant ainsi la première face (107) de chacune des aubes de buse (105) à une distance prédéfinie de la face (102) de la bague de recouvrement de buse (101) .

2. Buse d'entrée à faible frottement selon la revendication 1, la distance prédéfinie étant comprise entre 0,02 et 0,04 mm.
